# EUROPÄISCHE PATENTSCHRIFT

(11) **EP 3 601 030 B1**
(45) Veröffentlichungstag und Bekanntmachung des Hinweises auf die Patenterteilung: **06.01.2021**
(21) Anmeldenummer: 18703192.7
(22) Anmeldetag: 17.01.2018
(51) Int. Cl.: B62K 25/08, B60G 13/14, F03G 7/08, H02K 35/02, H02K 41/03

(54) **STOSSDÄMPFER MIT ENERGIERÜCKGEWINNUNG**
REGENERATIVE SHOCK ABSORBER
AMORTISSEUR DE CHOCS À RÉCUPÉRATION D'ÉNERGIE

(30) Priorität: 20.03.2017 DE 102017105869
(43) Veröffentlichungstag der Anmeldung: 05.02.2020
(73) Patentinhaber: Schaeffler Technologies AG & Co. KG, 91074 Herzogenaurach (DE)
(72) Erfinder: DOSHI, Pritesh, 411035 Pune (IN)
(86) Internationale Anmeldenummer: PCT/DE2018/100036
(87) Internationale Veröffentlichungsnummer: WO 2018/171827

(56) Entgegenhaltungen:
- WO-A1-2016/097898
- CN-A- 105 711 368
- TW-A- 201 102 501
- US-A1- 2015 330 372

## Beschreibung

Die Erfindung betrifft eine Stoßdämpferanordnung, mit deren Hilfe Stöße von einem Rad eines Fahrzeugs, insbesondere Zweirads, gedämpft werden können. Die Erfindung betrifft ferner ein Fahrzeug mit einer solchen Stoßdämpferanordnung.
Aus FR 2995561 A1 ist ein Stoßdämpfer bekannt, bei dem ein Federbein gegenpolig zueinander in Reihe geschaltete Permanentmagnete aufweist, die bei einer Relativbewegung des Federbeins zu einem Dämpfungszylinder durch eine Spule bewegt werden, um in der Spule einen elektrischen Strom zu induzieren.
JP 2004 215375 A beschreibt eine Energieerzeugungsdämpfervorrichtung zum Dämpfen von Schwingungen durch Betreiben eines Generators durch einen Übertragungsmechanismus und Regenerieren von Verlagerungsenergie zu elektrischer Energie, umfassend einen Generator zum Erzeugen von Energie durch Relativbewegung eines Magnetfelds.
DE 82 22 808 U1 beschreibt eine induktive Feder- und Dämpfervorrichtung nach dem Prinzip einer linearen Synchronmaschine zur Aufnahme linearer Auslenkungen, mit einer kolbenartigen Magnetpolanordnung, die in dem zylinderförmigen Innenraum einer hohlzylindrischen Wicklung mit mehreren parallel zueinander angeordneten Magnetspulen beweglich gehalten ist und die mehrere parallel zueinander angeordnete, ringförmige, Permanentmagnetpole aufweist.
Es besteht ein ständiges Bedürfnis bei der Dämpfung von Stößen auftretende Energie elektrisch nutzbar zu machen.

Weiterhin offenbart die TW 201 102 501 A eine Stoßdämpferanordnung mit Energierückgewinnung für ein Zweirad, zur gedämpften Abfederung von Stößen.

Es ist die Aufgabe der Erfindung Maßnahmen aufzuzeigen, die eine gute elektrische Nutzung von bei der Dämpfung von Stößen auftretende Energie ermöglichen.

Die Lösung der Aufgabe erfolgt erfindungsgemäß durch eine Stoßdämpferanordnung mit den Merkmalen des Anspruchs 1. Bevorzugte Ausgestaltungen der Erfindung sind in den Unteransprüchen und der nachfolgenden Beschreibung angegeben, die jeweils einzeln oder in Kombination einen Aspekt der Erfindung darstellen können.

Erfindungsgemäß ist eine Stoßdämpferanordnung für ein Fahrzeug zur gedämpften Abfederung von Stößen, insbesondere für ein Zweirad, vorgesehen mit einem Stoßdämpfer, der einen Dämpferzylinder, ein in dem Dämpferzylinder zur Bereitstellung einer Dämpfung linear geführtes Federbein, eine Magnetanordnung zur Erzeugung eines magnetischen Felds und eine mit der Magnetanordnung zur elektromagnetischen Induktion zusammenwirkende Spule aufweist, wobei eine lineare Relativbewegung der Magnetanordnung zur Spule mit einer Relativbewegung des Federbeins zum Dämpferzylinder gekoppelt ist, wobei die Magnetanordnung wechselpolig im Wesentlichen parallel zueinander ausgerichtete Magneten aufweist.
Die Magnetanordnung und die Spule sind erfindungsgemäß außerhalb des Dämpferzylinders angeordnet.
Weiterhin umfasst die Stoßdämpferanordnung erfindungsgemäß einen weiteren Dämpferzylinder und ein in dem weiteren Dämpferzylinder zur Bereitstellung einer Dämpfung linear geführtes weiteres Federbein, wobei die Magnetanordnung und die Spule zwischen dem Dämpferzylinder und dem weiteren Dämpferzylinder angeordnet ist und die Magnetanordnung und die Spule mit dem weiteren Dämpfer und mit dem weiteren Federbein gekoppelt sind.

Dadurch, dass die Magnetanordnung und die Spule außerhalb des Dämpferzylinders angeordnet sind, ist der Bauraum für die Magnetanordnung und die Spule nicht durch den Bauraum des Dämpferzylinders und/oder des Federbeins beschränkt.

Beispielsweise kann ein einzelnes Rad eines Fahrzeugs, insbesondere Zweirad, sowohl an der rechten Seite als auch an der linken Seite mit jeweils einer aus dem Federbein und dem Dämpferzylinder zusammengesetzten Dämpfereinheit verbunden, wobei sich diese Dämpfereinheiten nur eine gemeinsame Magnetanordnung mit Spule teilen. Durch die wechselpolig im Wesentlichen parallel zueinander ausgerichteten Magneten kann mit einer geeignet hierzu ausgestalteten Spule ein besonders großer elektrischer Strom induziert werden, so dass eine gute elektrische Nutzung von bei der Dämpfung von Stößen auftretende Energie ermöglicht ist.

Insbesondere ist eine an dem Dämpferzylinder und dem Federbein angreifende Dämpferfeder vorgesehen.

Das in dem Dämpferzylinder geführte Federbein kann eine Dämpfungswirkung bereitstellen, während die an dem Dämpferzylinder und dem Federbein angreifende Dämpferfeder eine Federwirkung bereitstellen kann. Die beim Dämpfen auftretende Relativbewegung des Federbeins zum Dämpferzylinder kann in eine Relativbewegung der Magnetanordnung zur Spule umgesetzt werden, indem die Magnetanordnung mit dem Federbein und die Spule mit dem Dämpferzylinder verbunden ist oder indem die Spule mit dem Federbein und die Magnetanordnung mit dem Dämpferzylinder verbunden ist. Die Magnetanordnung kann innerhalb der Spule angeordnet sein. Durch die Relativbewegung der Magnetanordnung zur Spule kann das magnetische Feld der Magnetanordnung in der Spule einen elektrischen Strom induzieren. Hierbei sind die Magneten der Magnetanordnung wechselpolig im Wesentlichen parallel zueinander ausgerichtet. Das heißt, dass bei einem Magnet der Nord- und der Südpol in die eine Richtung weisen, während bei einem nachfolgenden parallel angeordneten Magneten der Nord- und der Südpol in entgegengesetzter Richtung ausgerichtet sind. Die jeweiligen, beispielsweise als Flachstabmagneten ausgestaltete, Magnete sind dadurch antiparallel angeordnet. Dadurch ergibt sich eine Seite mit sehr nah beieinander angeordneten Magnetpolen und eine entgegen gerichtete Seite mit sehr nah beieinander angeordneten Magnetpolen mit einer gegenteiligen Abfolge von Nord- und Südpolen. Benachbarte Magneten können über ein Dielektrikum jeweils voneinander getrennt sein. Im Vergleich zu in Reihe ausgerichteten Magneten kann sich an den Magnetenden ein deutlich stärkeres Magnetfeld mit einer höheren Flussdichte ergeben, so dass ein entsprechend hoher Strom in die Spule induziert werden kann. Die Spule weist hierzu insbesondere Spulenwindungen auf, die in Längsrichtung der Magnetanordnung verlaufen und an den axialen Enden in die entgegengesetzte Längsrichtung umgelenkt werden, wobei die in Längsrichtung verlaufenden Leiterbereiche der Spule nebeneinander entlang einer im Wesentlichen geschlossenen Kreisbahn angeordnet sind. Die Spule ist dadurch nicht schraubenförmig in Längsrichtung verlaufend, sondern im Wesentlichen mäanderförmig in Umfangsrichtung verlaufend ausgestaltet. Durch die wechselpolig im Wesentlichen parallel zueinander ausgerichteten Magneten kann mit einer geeignet hierzu ausgestalteten Spule ein besonders großer elektrischer Strom induziert werden, so dass eine gute elektrische Nutzung von bei der Dämpfung von Stößen auftretende Energie ermöglicht ist.

Insbesondere ist die Nord-Süd-Ausrichtung der Magneten im Wesentlichen senkrecht zur Relativbewegung der Magnetanordnung zur Spule ausgerichtet. Der Nordpol des einen Magneten und der Südpol des nachfolgenden Magneten können dadurch entlang der Bewegungsrichtung angeordnet sein, so dass auch ein besonders starker magnetischer Fluss zwischen den Magnetenden nachfolgender Magnete entlang der Bewegungsrichtung erfolgt. Die Feldlinien der Magnetenden nachfolgender Magnete sind zu einem Großteil im Wesentlichen parallel zur Bewegungsrichtung und insbesondere zur axialen Längsrichtung der Spule ausgerichtet. Dadurch kann ein besonders starker Strom induziert werden.

Vorzugsweise ist die Magnetanordnung ausschließlich linear verlagerbar. Eine Rotation der Magnetanordnung ist dadurch eingespart, so dass eine rotatorische Lagerung nicht erforderlich ist. Dadurch ergibt sich ein einfacher und kostengünstiger Aufbau. Gegebenenfalls ist die Magnetanordnung gegen ein Drehen um ihre Längsachse relativ zur Spule gesichert.

Besonders bevorzugt ist die Relativbewegung der Magnetanordnung zur Spule im Wesentlichen parallel und/oder koaxial zur Relativbewegung des Federbeins zum Dämpferzylinder vorgesehen. Die Magnetanordnung kann mit dem Federbein und die Spule mit dem Dämpferzylinder verbunden sein oder die Spule kann mit dem Federbein und die Magnetanordnung mit dem Dämpferzylinder verbunden sein. Die Verbindung kann insbesondere direkt ohne Übersetzung oder indirekt mit einer Wegübersetzung erfolgen. Beispielsweise kann die Magnetanordnung Teil des Federbeins sein, während die Spule an dem Dämpferzylinder befestigt ist, so dass eine direkte Koppelung der Relativbewegung des Federbeins zum Dämpferzylinder mit der Relativbewegung der Magnetanordnung zur Spule erfolgen kann.

Die Magnetanordnung und die Spule sind außerhalb des Dämpferzylinders angeordnet, wobei insbesondere die Magnetanordnung und die Spule zu dem Dämpferzylinders in radialer Richtung versetzt angeordnet ist. Der Bauraum für die Magnetanordnung und die Spule ist dadurch nicht durch den Bauraum des Dämpferzylinders und/oder des Federbeins beschränkt. Insbesondere kann, beispielsweise durch einen Hebelmechanismus, leicht eine Wegübersetzung erreicht werden, wodurch die bei einem Dämpfungsereignis rekuperierte elektrische Energie erhöht werden kann. Zudem ist es möglich mit der Magnetanordnung und der Spule mehr als eine aus dem Federbein und dem Dämpferzylinder zusammengesetzte Dämpfereinheit anzukoppeln. Beispielsweise kann ein einzelnes Rad eines Fahrzeugs, insbesondere Zweirad, sowohl an der rechten Seite als auch an der linken Seite mit jeweils einer Dämpfereinheit verbunden, wobei sich diese Dämpfereinheiten nur eine gemeinsame Magnetanordnung mit Spule teilen.

Vorzugsweise sind die Magneten der Magnetanordnung als Permanentmagnet oder als Elektromagnet ausgestaltet. Für die Permanentmagneten ist ein separater Anschluss einer Stromquelle nicht erforderlich. Wenn die Magneten als Elektromagneten ausgestaltet sind, sind die Elektromagneten insbesondere an einer wiederaufladbaren Batterie angeschlossen, in die auch die von der Spule erzeugte elektrische Energie gespeichert wird. Insbesondere wenn nach einem Start des Kraftfahrzeugs mit vielen Dämpfungsereignissen zu rechnen ist, wird mehr elektrische Energie von der Spule rekuperiert als für den Betrieb der Elektromagneten erforderlich ist.

Besonders bevorzugt ist die Spule mit einem Gleichrichter zur Erzeugung von Gleichstrom für eine speicherbare Batterie verbunden. Ein in der Spule induzierter Wechselstrom kann dadurch in Gleichstrom umgewandelt werden, so dass damit die Batterie aufgeladen werden kann.

Insbesondere ist zwischen dem Gleichrichter und der Batterie ein Gleichspannungswandler zur Wandlung der den Gleichrichter verlassenden Spannung auf eine Nennbetriebsspannung für die Batterie zwischengeschaltet. Dadurch kann sichergestellt werden, dass die Batterie mit einer geeigneten Ladespannung betrieben wird. Unnötige Spannungsspitzen können herausgefiltert werden und/oder eine zu niedrige Spannung ausgeglichen werden.
Ein Fahrzeug, insbesondere Zweirad, mit einer erfindungsgemäßen Stoßdämpferanordnung hat sich besonders bewährt, wobei die Magnetanordnung und die Spule in einem, von einem Rad des Fahrzeugs überdeckten Axialbereich angeordnet sind. Dadurch kann leicht ein ansonsten ungenutzter Bauraum für die Magnetanordnung und die Spule verwendet werden.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
- Fig. 1:: eine schematische Vorderansicht eines Zweirads und
- Fig. 2:: eine schematische Detailansicht des Zweirads aus Fig. 1.

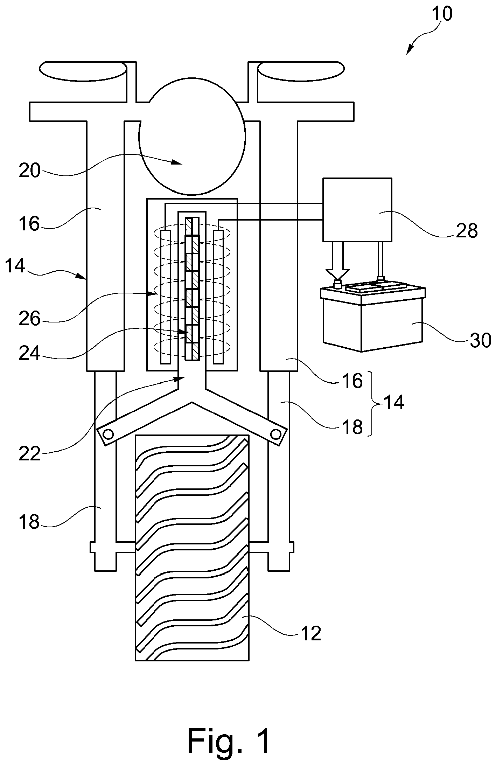

Das in Fig. 1 dargestellte Zweirad 10 weist ein Rad 12 auf, das an zwei Seiten von jeweils einer Dämpfereinheit 14 in der Art einer Radaufhängung gedämpft und gefedert ist. Die Dämpfereinheit 14 weist einen mit dem Chassis 20 des Zweirads 10 verbundenen Dämpferzylinder 16 und ein in dem Dämpferzylinder geführtes und mit dem Rad 12 gekoppeltes Federbein 18 auf. An dem Dämpferzylinder 16 und an dem Federbein 18 greift eine nicht dargestellte Dämpferfeder an. Die Federbeine 18 beider Dämpfereinheiten 14 sind über eine mechanische Koppelung 22 mit einer Magnetanordnung 24 verbunden, die parallel zur Dämpfungsbewegung der Dämpfereinheiten 14 innerhalb einer mit dem Chassis 20 verbundenen Spule 26 verlagert werden kann, um dadurch einen elektrischen Strom in der Spule 26 zu induzieren. Vorzugsweise wird durch die mechanische Koppelung 22 eine Wegübersetzung der Relativbewegung des Federbeins 18 im Dämpferzylinder 16 zur Relativbewegung der Magnetanordnung 24 in der Spule 26 erreicht. Der Strom der Spule 26 kann über eine Leistungselektronik 28, die insbesondere einen Gleichrichter und einen Gleichspannungswandler aufweist, in einer wiederaufladbaren Batterie 30 gespeichert werden. Die Magnetanordnung 24 und die Spule 26 sind zwischen den Dämpfereinheiten 14 oberhalb von dem Rad 12 des Zweirads 10 positioniert, so dass ein Axialbereich des Rads 12 in radialer Richtung des Rads 12 betrachtet die Magnetanordnung 24 und die Spule 26 überdecken kann.

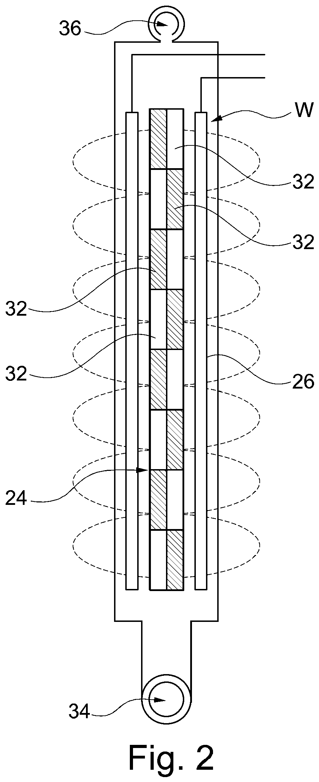

Wie in Fig. 2 dargestellt weist die Magnetanordnung 24 antiparallel angeordnete Magnete 32 auf, die parallel zu Dämpfungsbewegung der Dämpfereinheiten 14 parallel geschaltet wechselpolig parallel zueinander ausgerichtet sind. Die Magneten 32 sind insbesondere als Flachstabmagneten ausgestaltet, die im Wesentlichen in horizontaler Richtung ausgerichtet sind, wobei in vertikaler Richtung auf dem Nordpol des einen Magneten 32 ein Südpol des nachfolgenden Magneten 32 folgt und immer so weiter. Die Nord-Süd-Ausrichtung der Magneten ist im Wesentlichen parallel zueinander, wobei die Richtung des Magnetfelds nachfolgender Magneten 32 in entgegengesetzte Richtungen weisen. Die Spule 26 weist parallel zu Dämpfungsbewegung der Dämpfereinheiten 14 verlaufende Leiterbereiche auf, die in Umfangsrichtung um die Magnetanordnung 24 herum angeordnet sind, wobei jeweils in Umfangsrichtung nachfolgende Leiterbereiche zwischen den Anschlüssen der Spule 26 miteinander kontaktiert sind. Die Magnetanordnung 24 ist über ein beispielsweise als Öffnung ausgestaltetes erstes Befestigungsmittel 34 mit der Koppelung 22 verbunden. Die Spule 24 kann Teil einer Hülse sein, in der die Magnetanordnung parallel zu Dämpfungsbewegung der Dämpfereinheiten 14, insbesondere verdrehgesichert, linear geführt ist und die über ein beispielsweise als Öffnung ausgestaltetes zweites Befestigungsmittel 36 mit dem Chassis 20 verbunden ist.

### Bezugszeichenliste

- 10: Zweirad
- 12: Rad
- 14: Dämpfereinheit
- 16: Dämpferzylinder
- 18: Federbein
- 20: Chassis
- 22: Koppelung
- 24: Magnetanordnung
- 26: Spule
- 28: Leistungselektronik
- 30: Batterie
- 32: Magnet
- 34: erstes Befestigungsmittel
- 36: zweites Befestigungsmittel

## Patentansprüche

1. Stoßdämpferanordnung für ein Fahrzeug zur gedämpften Abfederung von Stößen, insbesondere für ein Zweirad (10),
mit einem Stoßdämpfer, der einen Dämpferzylinder (16), ein in dem Dämpferzylinder (16) zur Bereitstellung einer Dämpfung linear geführtes Federbein (18), eine Magnetanordnung (24) zur Erzeugung eines magnetischen Felds und eine mit der Magnetanordnung (24) zur elektromagnetischen Induktion zusammenwirkenden Spule (26) aufweist, wobei eine lineare Relativbewegung der Magnetanordnung (24) zur Spule (26) mit einer Relativbewegung des Federbeins (18) zum Dämpferzylinder (16) gekoppelt ist, wobei die Magnetanordnung (24) und die Spule (26) außerhalb des Dämpferzylinders (16) angeordnet sind, und mit einem weiteren Dämpferzylinder und einem in dem weiteren Dämpferzylinder zur Bereitstellung einer Dämpfung linear geführten weiteren Federbein, wobei die Magnetanordnung (24) und die Spule (26) mit dem weiteren Dämpfer und mit dem weiteren Federbein gekoppelt sind, **dadurch gekennzeichnet, dass**
die Magnetanordnung (24) wechselpolig im Wesentlichen parallel zueinander ausgerichtete Magneten (32) aufweist, und dass die Magnetanordnung (24) und die Spule (26) zwischen dem Dämpferzylinder und dem weiteren Dämpferzylinder angeordnet sind.

2. Stoßdämpferanordnung nach Anspruch 1 **dadurch gekennzeichnet, dass** die Nord-Süd-Ausrichtung der Magneten (32) im Wesentlichen senkrecht zur Relativbewegung der Magnetanordnung (24) zur Spule (26) ausgerichtet ist.

3. Stoßdämpferanordnung nach Anspruch 1 oder 2 **dadurch gekennzeichnet, dass** die Magnetanordnung (24) ausschließlich linear verlagerbar ist.

4. Stoßdämpferanordnung nach einem der Ansprüche 1 bis 3 **dadurch gekennzeichnet, dass** die Relativbewegung der Magnetanordnung (24) zur Spule (26) im Wesentlichen parallel und/oder koaxial zur Relativbewegung des Federbeins (18) zum Dämpferzylinder (16) vorgesehen ist.

5. Stoßdämpferanordnung nach einem der Ansprüche 1 bis 4 **dadurch gekennzeichnet, dass** die Magnetanordnung (24) und die Spule (26) zu dem Dämpferzylinder (16) in radialer Richtung versetzt angeordnet sind.

6. Stoßdämpferanordnung nach einem der Ansprüche 1 bis 5 **dadurch gekennzeichnet, dass** die Magneten (32) der Magnetanordnung (24) als Permanentmagnet oder als Elektromagnet ausgestaltet sind.

7. Stoßdämpferanordnung nach einem der Ansprüche 1 bis 5 **dadurch gekennzeichnet, dass** die Spule (26) mit einem Gleichrichter zur Erzeugung von Gleichstrom für eine speicherbare Batterie (30) verbunden ist.

8. Stoßdämpferanordnung nach Anspruch 7 **dadurch gekennzeichnet, dass** zwischen dem Gleichrichter und der Batterie (30) ein Gleichspannungswandler zur Wandlung der den Gleichrichter verlassenden Spannung auf eine Nennbetriebsspannung für die Batterie (30) zwischengeschaltet ist.

9. Fahrzeug, insbesondere Zweirad (10), mit einer Stoßdämpferanordnung nach einem der Ansprüche 1 bis 8, wobei die Magnetanordnung (24) und die Spule (26) in einem, von einem Rad (12) des Fahrzeugs überdeckten Axialbereich angeordnet sind.

## Claims

1. A shock absorber arrangement for a vehicle for dampened cushioning of impacts, in particular for a bicycle (10),
having a shock absorber having a damper cylinder (16), a spring strut (18) linearly guided in the damper cylinder (16) to provide damping, a magnet arrangement (24) for generating a magnetic field and a coil (26) interacting with the magnet arrangement (24) for electromagnetic induction, wherein a linear relative movement of the magnet arrangement (24) to the coil (26) is coupled to a relative movement of the spring strut (18) to the damper cylinder (16), wherein the magnet arrangement (24) and the coil (26) are arranged outside the damper cylinder (16), and having a further damper cylinder and a further spring strut linearly guided in the further damper cylinder to provide damping, wherein the magnet arrangement (24) and the coil (26) are coupled to the further damper and to the further spring strut, **characterised in that** the magnet arrangement (24) has magnets (32) oriented with alternate poles substantially parallel to one another, and **in that** the magnet arrangement (24) and the coil (26) are arranged between the damper cylinder and the further damper cylinder.

2. The shock absorber arrangement according to claim 1, **characterised in that** the north-south orientation of the magnets (32) is oriented substantially perpendicular to the relative movement of the magnet arrangement (24) to the coil (26).

3. The shock absorber arrangement according to claim 1 or 2, **characterised in that** the magnet arrangement (24) can only be displaced linearly.

4. The shock absorber arrangement according to any one of claims 1 to 3, **characterised in that** the relative movement of the magnet arrangement (24) to the coil (26) is provided substantially parallel and/or coaxial to the relative movement of the spring strut (18) to the damper cylinder (16).

5. The shock absorber arrangement according to any one of claims 1 to 4, **characterised in that** the magnet arrangement (24) and the coil (26) are arranged offset in the radial direction relative to the damper cylinder (16).

6. The shock absorber arrangement according to any one of claims 1 to 5, **characterised in that** the magnets (32) of the magnet arrangement (24) are designed as permanent magnets or as electromagnets.

7. The shock absorber arrangement according to any one of claims 1 to 5, **characterised in that** the coil (26) is connected to a rectifier for generating direct current for a storable battery (30).

8. The shock absorber arrangement according to claim 7, **characterised in that** a DC voltage converter for converting the voltage leaving the rectifier to a nominal operating voltage for the battery (30) is connected between the rectifier and the battery (30).

9. A vehicle, in particular a bicycle (10), having a shock absorber arrangement according to any one of claims 1 to 8, wherein the magnet arrangement (24) and the coil (26) are arranged in an axial area covered by a wheel (12) of the vehicle.

## Revendications

1. Ensemble amortisseur de chocs pour un véhicule destiné à l'absorption amortie de chocs, en particulier pour un deux-roues (10),
comprenant un amortisseur de chocs, lequel comporte un cylindre d'amortisseur (16), une jambe de force (18) guidée linéairement dans le cylindre d'amortisseur (16) pour fournir un amortissement, un ensemble d'aimants (24) pour générer un champ magnétique et une bobine (26) coopérant avec l'ensemble d'aimants (24) pour une induction électromagnétique, dans lequel un déplacement relatif linéaire de l'ensemble d'aimants (24) par rapport à la bobine (26) est couplé à un déplacement relatif de la jambe de force (18) par rapport au cylindre d'amortisseur (16), dans lequel l'ensemble d'aimants (24) et la bobine (26) sont disposés à l'extérieur du cylindre d'amortisseur (16) et, comprenant un autre cylindre d'amortisseur et une autre jambe de force guidée linéairement dans l'autre cylindre d'amortisseur pour fournir un amortissement, dans lequel l'ensemble d'aimants (24) et la bobine (26) sont couplés à l'autre amortisseur de chocs et à l'autre jambe de force, **caractérisé en ce que** l'ensemble d'aimants (24) comprend des aimants (32) orientés sensiblement parallèlement les uns aux autres avec alternance de pôles et que l'ensemble d'aimants (24) et la bobine (26) sont disposés entre le cylindre d'amortisseur et l'autre cylindre d'amortisseur.

2. Ensemble amortisseur de chocs selon la revendication 1, **caractérisé en ce que** l'orientation nord-sud des aimants (32) est orientée essentiellement perpendiculairement au déplacement relatif de l'ensemble d'aimants (24) par rapport à la bobine (26).

3. Ensemble amortisseur de chocs selon la revendication 1 ou 2, **caractérisé en ce que** l'ensemble d'aimants (24) ne peut être déplacé que linéairement.

4. Ensemble amortisseur de chocs selon l'une quelconque des revendications 1 à 3, **caractérisé en ce que** le déplacement relatif de l'ensemble d'aimants (24) par rapport à la bobine (26) est sensiblement parallèle et/ou coaxial au déplacement relatif de la jambe de force (18) par rapport au cylindre d'amortisseur (16).

5. Ensemble amortisseur de chocs selon l'une quelconque des revendications 1 à 4, **caractérisé en ce que** l'ensemble d'aimants (24) et la bobine (26) sont disposés par rapport au cylindre d'amortisseur (16) décalés dans la direction radiale.

6. Ensemble amortisseur de chocs selon l'une quelconque des revendications 1 à 5, **caractérisé en ce que** les aimants (32) de l'ensemble d'aimants (24) sont conçus sous la forme d'aimants permanents ou d'électroaimants.

7. Ensemble amortisseur de chocs selon l'une quelconque des revendications 1 à 5, **caractérisé en ce que** la bobine (26) est raccordée à un redresseur pour générer du courant continu pour une batterie (30) accumulée.

8. Ensemble amortisseur de chocs selon la revendication 7, **caractérisé en ce que**, entre le redresseur et la batterie (30), un convertisseur de tension continue pour convertir la tension sortant du redresseur en une tension de fonctionnement nominale pour la batterie (30) est interconnecté.

9. Véhicule, en particulier deux roues (10), comprenant un ensemble amortisseur de chocs selon l'une quelconque des revendications 1 à 8, dans lequel l'ensemble d'aimants (24) et la bobine (26) sont disposés dans une zone axiale couverte par une roue (12) du véhicule.
